(19) **Europäisches Patentamt / European Patent Office / Office européen des brevets**

(11) **EP 4 427 834 A1**

(12) # EUROPEAN PATENT APPLICATION
published in accordance with Art. 153(4) EPC

(43) Date of publication:
**11.09.2024 Bulletin 2024/37**

(21) Application number: **22887169.5**

(22) Date of filing: **28.10.2022**

(51) International Patent Classification (IPC):
**B01D 53/14** (2006.01)     **B01J 20/02** (2006.01)
**B01J 20/10** (2006.01)     **B01J 20/28** (2006.01)
**B01J 20/30** (2006.01)

(52) Cooperative Patent Classification (CPC):
**B01D 53/14; B01J 20/02; B01J 20/10; B01J 20/28; B01J 20/30**

(86) International application number:
**PCT/JP2022/040348**

(87) International publication number:
**WO 2023/074844 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.11.2021 JP 2021178789**

(71) Applicant: **MITSUBISHI GAS CHEMICAL COMPANY, INC.**
**Chiyoda-ku**
**Tokyo 100-8324 (JP)**

(72) Inventors:
• **FURUHASHI, Kodai**
  **Tokyo 125-8601 (JP)**
• **SATO, Daiki**
  **Tokyo 125-8601 (JP)**

(74) Representative: **Hoffmann Eitle**
**Patent- und Rechtsanwälte PartmbB**
**Arabellastraße 30**
**81925 München (DE)**

(54) **DEOXYGENATION AGENT COMPOSITION AND METHOD FOR PRODUCING SAME, AND DEOXYGENATION AGENT PACKAGE COMPRISING SAID DEOXYGENATION AGENT COMPOSITION AND METHOD FOR PRODUCING SAME**

(57)     Abstract: there is provided an oxygen scavenger composition containing: a granule containing a water retention agent, a swelling agent, a metal salt, water and an iron; and a hydrophobic silica having an M value of 55 or more and an average particle diameter of 0.1 $\mu$m or more and 5.0 $\mu$m or less, wherein the content of the hydrophobic silica is 0.15 parts by mass or more and 0.5 parts by mass or less with respect to 100 parts by mass of the granule.

**Description**

Technical Field

The present invention relates to an oxygen scavenger composition and a method for producing the same, and an oxygen scavenger package including the oxygen scavenger composition and a method for producing the same.

Background Art

A method of using an oxygen scavenger is known as a storage technique for food products, pharmaceutical products, and the like. In this method, an article to be stored and the oxygen scavenger are enclosed and hermetically sealed in a sealed container having a gas-barrier property, whereby oxygen in the sealed container is absorbed by the oxygen scavenger and the atmosphere in the sealed container can be kept substantially in an oxygen-free state. As the function of the oxygen scavenger, the oxygen scavenger needs to be small in size and to absorb much oxygen. In other words, there is required an oxygen scavenger composition capable of a large amount of oxygen absorption per unit volume.

Typical oxygen scavengers include iron-based oxygen scavengers containing iron (iron powder) as their main agent and non-iron-based oxygen scavengers containing ascorbic acid, glycerol or the like as their main agent. Oxygen scavengers are suitably selected according to applications, but iron-based oxygen scavengers, from the viewpoint of the oxygen absorption performance, are broadly used.

However, the oxygen scavengers have been demanded to be smaller in size as one of performance characteristics required for oxygen scavengers.

In the case of conventional oxygen scavengers using iron powder and filled in small bags, the mainstream is downsizing by raising the activity of main agents to enhance the performance and reduce the amount to be filled.

As one example thereof, in the case where iron powder is used as a main agent, a method of coating the iron powder with a metal halide is described in PTL1. From the viewpoint only of improving the activity, it is also known that by selecting a reaction aid, the improvements in the reaction rate and the reaction ratio are attained. However, there are such problems that mixtures good in fluidity cannot be obtained and they are difficult to fill and package in small bags.

By contrast, PTL2 proposes an oxygen scavenger composition improved in fluidity and excellent in the amount of oxygen absorption per unit volume, wherein the oxygen scavenger composition contains a powdery/granule material having an α layer containing a water retention agent, a swelling agent, a metal salt and water, a β layer containing iron and a γ layer containing a porous carrier, and the powdery/granule material has a layer structure having the α layer, the β layer and the γ layer in this order from the inner side toward the outer side of the powdery/granule material. Specifically, it is set forth that, since the γ layer containing a silica adjoins the outside of the β layer, the slidability of the powdery/granule material becomes good and the powdery/granule material is closely filled, and therefore the bulk density of the oxygen scavenger composition becomes high and the amount of oxygen absorption per unit volume of the oxygen scavenger composition becomes large.

Citation List

Patent Literature

PTL1: Japanese Patent Laid-Open No. 54/35883
PTL2: International Publication No. WO2017/169015

Summary of Invention

Technical Problem

Meanwhile, the property required in a process of filling and packaging an oxygen scavenger composition in a small bag-shaped packaging material is not only the fluidity of the oxygen scavenger composition. The property particularly required is littleness of flying-up of the oxygen scavenger composition when it is filled in a packaging material. Flying-up of the oxygen scavenger composition during filling thereof in a packaging material brings about problems of contamination of a filling and packaging apparatus, a decrease in the filling amount, a decrease in the yield and the like. In particular, the contamination of the apparatus, since affecting its operation thereafter, necessitates frequent cleaning work, which is troublesome, and poses a problem of reducing the productivity.

The problem of flying-up of the oxygen scavenger composition as described above, however, has not been paid much attention to so far, and a suitable solving method has not yet been found out.

The present invention has an object to solve the above problematic point and provide an oxygen scavenger composition good in fluidity, little in flying-up and excellent in handleability during production of an oxygen scavenger package, and a method for producing the oxygen scavenger composition, and an oxygen scavenger package having the oxygen scavenger composition and a method for producing the oxygen scavenger package.

Solution to Problem

That is, the gist and constitution of the present invention is as follows.

[1] An oxygen scavenger composition, containing: a granule containing a water retention agent, a swelling agent, a metal salt, water and an iron; and a hydrophobic silica having an M value of 55 or more and an average particle diameter of 0.1 $\mu$m or more and 5.0 $\mu$m or less, wherein the content of the hydrophobic silica is 0.15 parts by mass or more and 0.5 parts by mass or less with respect to 100 parts by mass of the granule.

[2] The oxygen scavenger composition according to the above [1], wherein the water retention agent contains one or more selected from the group consisting of diatomaceous earth, silica and activated carbon.

[3] The oxygen scavenger composition according to the above [1] or [2], wherein the swelling agent contains one or more selected from the group consisting of carboxymethylcellulose calcium, carboxymethylcellulose sodium, calcium bentonite and sodium bentonite.

[4] The oxygen scavenger composition according to any one of the above [1] to [3], wherein the hydrophobic silica is a surface-treated precipitated silica.

[5] The oxygen scavenger composition according to any one of the above [1] to [4], wherein the hydrophobic silica is a precipitated silica surface-treated with a silicone oil.

[6] A method for producing an oxygen scavenger composition according to any one of the above [1] to [5], the method including a step of mixing the granules and the hydrophobic silica.

[7] An oxygen scavenger package including an oxygen scavenger composition according to any one of the above [1] to [5], and an air-permeable packaging material accommodating the oxygen scavenger composition.

[8] A method for producing an oxygen scavenger package, including a step of accommodating an oxygen scavenger composition according to any one of the above [1] to [5] in an air-permeable packaging material.

Advantageous Effects of Invention

According to the present invention, there can be provided an oxygen scavenger composition good in fluidity, little in flying-up and excellent in handleability during production of an oxygen scavenger package, and a method for producing the oxygen scavenger composition, and an oxygen scavenger package including the oxygen scavenger composition and a method for producing the oxygen scavenger package.

Description of Embodiment

Hereinafter, one embodiment of the present invention will be described. The content of the present invention is not limited to the embodiment described hereinafter.

Here, in the present description, the term, "A to B", related to numerical values means "A or more and B or less" (in the case of A < B) or "A or less and B or more" (in the case of A > B). Further in the present invention, combinations of preferable aspects are more preferable aspects.

[Oxygen scavenger composition]

The oxygen scavenger composition according to the present invention contains a granule containing a water retention agent, a swelling agent, a metal salt, water and an iron, and a hydrophobic silica having an M value of 55 or more and an average particle diameter of 0.1 $\mu$m or more and 5.0 $\mu$m or less, wherein the content of the hydrophobic silica is 0.15 parts by mass or more and 0.5 parts by mass or less with respect to 100 parts by mass of the granule.

The oxygen scavenger composition of the present invention, since being good in fluidity and little in flying-up due to having the above constitution, is excellent in handleability during production of an oxygen scavenger package. Hence, by using the oxygen scavenger composition of the present invention, the productivity of the oxygen scavenger package can be improved.

The reason for that the oxygen scavenger package of the present invention attains the above effect is not clear, but is presumed as follows.

First, in the oxygen scavenger composition of the present invention, the hydrophobic silica is present mainly so as to cover the surface of the granule, and it is conceivable that due to that at this time, the M value of the hydrophobic silica is 55 or more, the fluidity of the oxygen scavenger composition is improved and it becomes easy for the oxygen scavenger composition to be bagged in production of the oxygen scavenger package.

Secondly, it is presumed that by making the average particle diameter of the hydrophobic silica to be in the range of 0.1 μm or more and 5.0 μm or less, since it becomes easy for the hydrophobic silica to be adsorbed on the surface of the granule by forces of static electricity and the like, it becomes difficult for the hydrophobic silica to be desorbed from the surface of the granule, and consequently, in production of the oxygen scavenger package, flying-up of the oxygen scavenger composition, particularly particles of the hydrophobic silica can effectively be prevented.

Further, it is conceivable that by using the above specific hydrophobic silica, the fluidity of the oxygen scavenger composition can be improved even in a relatively low content thereof, and in particular, by making the content of the hydrophobic silica to be in the range of 0.15 parts by mass or more and 0.5 parts by mass or less with respect to 100 parts by mass of the granule, the effect of improving the fluidity and the effect of preventing the flying-up as described above can both be attained and the handleability during production of the oxygen scavenger package is improved.

<Granule>

The granule to be used in the present invention contains a water retention agent, a swelling agent, a metal salt, water and iron.

(Water retention agent)

The water retention agent contained in the oxygen scavenger composition of the present invention is a substance which is impregnated with water in the inside thereof and can hold water without oozing out, and as required, can supply water to surroundings, that is, a carrier (water retention carrier) to hold water.

Such a water retention agent is not especially limited as long as being one capable of holding water, but is preferably one or more selected from the group consisting of porous substances and highly water absorbing polymers, and more preferably a porous substance.

The porous substance suffices if being one having a porous structure and a water retention function, and examples thereof include diatomaceous earth, zeolite, sepiolite, cristobalite, porous glass, silica (here, excluding the hydrophobic silica having an M value of 55 or more and an average particle diameter of 0.1 μm or more and 5.0 μm or less. Hereinafter, the same applies to the silica as the water retention agent), activated clay, acid clay, activated carbon, vermiculite and wood meal. Among these, one or more selected from the group consisting of diatomaceous earth, silica and activated carbon are preferable.

The silica is preferably hydrophilic silica.

The activated carbon is especially preferable in that the activated carbon has, in addition to the water retention function, a function of promoting the oxidative reaction of iron. The kind of the activated carbon is not especially limited, and the starting material thereof may be any of wood, coconut husks, coal and the like.

The highly water absorbing resin suffices if being a resin capable of gelatinously solidifying a liquid such as water, and examples thereof include polyacrylate salt-based resins, polysulfonate salt-based resins, polyacrylamide-based resins, polyvinyl alcohol-based resins, starch-based resins, cellulose-based resins and polyalginic acid-based resins.

The above-mentioned water retention agent can be used singly in one kind, or as required, can be used in combination of two or more kinds. These water retention agents are easily available as commercial products and can also be used.

The water retention agent preferably contains a porous substance, more preferably contains one or more selected from the group consisting of diatomaceous earth, silica and activated carbon, and from the viewpoint of more enhancing the water retention function, still more preferably contains activated carbon and one or more selected from the group consisting of diatomaceous earth and silica.

The property of the water retention agent is not especially limited, but from the viewpoint of handleability thereof during production of the oxygen scavenger composition, a water retention agent is suitably used which is a powdery one high in fluidity; and a water retention agent is more preferable whose particle shape is nearly spherical. The average particle diameter of the water retention agent is, from the viewpoint of handleability during production of the oxygen scavenger composition, for example, 5 μm or more and 1,000 μm or less, preferably 10 μm or more and 1,000 μm or less, more preferably 10 μm or more and 500 μm or less and still more preferably 100 μm or more and 500 μm or less. The particle of the water retention agent can be used regardless of a primary particle, an aggregated particle or a granule as long as the particle is one having a particle size in the above range. The water retention agent having a particle size in the above range can be used singly in one kind, or can also be used by mixing a plurality of kinds thereof having different particle sizes in an optional proportion.

Here, the average particle diameter of the water retention agent can be measured by a method described in Examples.

The content of the water retention agent is not especially limited, but is, in the oxygen scavenger composition, preferably 10% by mass or more and 40% by mass or less, and more preferably 15% by mass or more and 30% by mass or less. The content of the water retention agent is, with respect to 100 parts by mass of water, preferably 20 parts by mass or more and 300 parts by mass or less, and more preferably 50 parts by mass or more and 200 parts by mass or less. When the content of the water retention agent is in the range, the oxygen scavenger composition can sufficiently hold water and there can be raised the amount of oxygen absorption per unit volume of the oxygen scavenger composition.

(Swelling agent)

The swelling agent contained in the oxygen scavenger composition of the present invention is a substance which is swollen with moisture and has a binding function in order to hold the shape of the granule, and is specifically a substance (so-called thickener) which can increase the viscosity of a solution by being dissolved or dispersed in a liquid such as an aqueous solution.

It is preferable that the swelling agent is used in a substantially dry state or a half-swollen or swollen state in which a small amount of water or a required amount of water is absorbed.

The swelling agent is not especially limited as long as it has a binding function, and for example, in addition to well-known swelling agents used for food and the like, binding agents, tacky adhesives, binders and the like can also be used.

The swelling agent may be either an inorganic swelling agent or an organic swelling agent.

The inorganic swelling agent includes clay minerals such as sodium bentonite, calcium bentonite and sodium montmorillonite. The clay minerals are preferable because of being inexpensive and excellent also in the performance. In particular, the clay minerals are known also as inorganic soaps and have a function as a lubricant, and the clay minerals swollen with water are known to exhibit a high thixotropy, and exhibit excellent binding property. Among these, from the viewpoint of being inexpensive and strong in the binding force, bentonites such as calcium bentonite and sodium bentonite are preferable.

Organic swelling agents include organic bentonite; natural substances such as defatted frozen-dried tofu, agar, starch, dextrin, gum arabic, gelatin and casein; semi-synthetic products such as crystalline cellulose, carboxymethylcellulose, carboxymethylcellulose sodium, carboxymethylcellulose calcium, hydroxyethylcellulose, ligninsulfonic acid and hydroxyethylated starch; and synthetic products such as water-insolubilized polyvinyl alcohol and polyvinyl methyl ether. Among these, from the viewpoint of an exhibiting excellent swelling property, preferable are cellulose-based semi-synthesized products such as crystalline cellulose, carboxymethylcellulose, carboxymethylcellulose sodium, carboxymethylcellulose calcium and hydroxyethylcellulose; and from the viewpoint of being inexpensive and strong in the binding force, preferable are carboxymethylcellulose, carboxymethylcellulose sodium and carboxymethylcellulose calcium.

The above-mentioned swelling agents may be used singly, or as required, in combination of two or more. These swelling agents are also easily available as commercial products and can be used.

The swelling agent is preferably one or more selected from the group consisting of the clay minerals and the cellulose-based semi-synthesized products, and from the viewpoint of being inexpensive and strong in the binding force, more preferably one or more selected from the group consisting of the bentonites and the cellulose-based semi-synthesized products.

More specifically, the swelling agent preferably contains one or more selected from the group consisting of carboxymethylcellulose calcium, carboxymethylcellulose sodium, calcium bentonite and sodium bentonite, and is more preferably one or more selected from the group consisting of carboxymethylcellulose calcium, carboxymethylcellulose sodium, calcium bentonite and sodium bentonite.

The average particle diameter of the swelling agent is, from the viewpoint of suppressing the generation of dusts and from the viewpoint of the binding function, preferably 0.001 $\mu$m or more and 10 $\mu$m or less, and more preferably 0.01 $\mu$m or more and 1.0 $\mu$m or less.

The content of the swelling agent is not especially limited, but is, in the oxygen scavenger composition, preferably 0.1% by mass or more and 20% by mass or less, more preferably 1% by mass or more and 15% by mass or less and still more preferably 1% by mass or more and 5% by mass or less, and is, with respect to 100 parts by mass of the iron, preferably 1 part by mass or more and 15 parts by mass or less, more preferably 2 parts by mass or more and 10 parts by mass or less and still more preferably 3 parts by mass or more and 10 parts by mass or less. When the content of the swelling agent is in the range, it is likely that the shape of the oxygen scavenger composition becomes easy to maintain; the proportion of the water retention agent does not become too low; the amount of moisture supplied to the iron does not decrease; and the amount of oxygen absorption becomes larger.

(Metal salt)

The metal salt contained in the oxygen scavenger composition of the present invention is a substance which catalytically acts on the oxidative reaction of the iron to improve the activity of the iron. Further, the metal salt plays a role of preventing water contained in the oxygen scavenger composition from transpiring and being lost from the oxygen scavenger composition.

The metal salt is not especially limited, but is preferably a metal halide. As the metal halide, any one can be used without particular limitation as long as being a usually known one.

A metal in the metal halide is not especially limited, but examples thereof include at least one selected from the group consisting of alkali metals, alkaline earth metals, copper, zinc, aluminum, tin, iron, cobalt and nickel. Among these, more preferable is at least one selected from the group consisting of lithium, potassium, sodium, magnesium, calcium, barium and iron. A halide in the metal halide is not especially limited, but examples thereof include chlorides, bromides and iodides.

As the metal halide, from the viewpoint of handleability, safety and the like, preferable are calcium chloride, sodium chloride, calcium bromide, sodium bromide, calcium iodide and sodium iodide; more preferable are at least one selected from the group consisting of calcium chloride and sodium chloride; and especially preferable is sodium chloride.

The metal salt can be used singly in one kind, or as required, can be used in combination of two or more kinds. These metal salts are easily available as commercial products, and can be used.

In the case of using, as a starting material, an aqueous solution of the metal salt, the concentration of the salt is preferably 5% by mass or more and 30% by mass or less, and more preferably 10% by mass or more and 20% by mass or less. The concentration of the salt at 5% by mass or more suppresses a decrease in the action of catalyzing the oxidation of the iron ; and the concentration of the salt at 30% by mass or less can suppress a decrease in the vapor pressure of moisture. It can suppress insufficient supply of moisture to the iron which decreases the amount of oxygen absorption.

The content of the metal salt is not especially limited, but is, in the oxygen scavenger composition, preferably 0.5% by mass or more and 15% by mass or less, more preferably 1% by mass or more and 10% by mass or less and still more preferably 1% by mass or more and 5% by mass or less. Further, the content is, with respect to 100 parts by mass of the iron, preferably 0.5 parts by mass or more and 20 parts by mass or less, more preferably 2 parts by mass or more and 10 parts by mass or less and still more preferably 5 parts by mass or more and 10 parts by mass or less.

(Water)

From the viewpoint that the iron-based oxygen scavenger exhibits the oxygen absorption performance, the oxygen scavenger composition of the present invention contains water. The content of water is not especially limited, but is, in the oxygen scavenger composition, preferably 10% by mass or more and 40% by mass or less, more preferably 15% by mass or more and 30% by mass or less and still more preferably 15% by mass or more and 20% by mass or less. Further, from the viewpoint of the oxygen absorption performance, the content is, with respect to 100 parts by mass of the iron, preferably 20 parts by mass or more and 50 parts by mass or less, more preferably 25 parts by mass or more and 40 parts by mass or less and still more preferably 30 parts by mass or more and 40 parts by mass or less.

(Iron)

The shape of the iron contained in the oxygen scavenger composition of the present invention is not especially limited, but is, from the viewpoint of the oxygen absorption performance, the easy availability and the easy handleability, preferably an iron powder.

The iron powder is preferably one in which the surface of iron (0-valent metallic iron) is exposed, but in the range of not inhibiting the advantageous effects of the present invention, may be one having an ultrathin oxide film like usual metal surfaces. There specifically can suitably be used reduced iron powder, electrolytic iron powder, atomized iron powder and the like. Further, pulverized products and cutting chips of cast iron or the like can also be used.

The iron powder can be used singly in one kind, or as required, in combination of two or more kinds. These iron powders are easily available as commercial products and can also be used.

In addition, there can be used an iron powder coated with a metal halide, exemplified as the metal salt in the above, on the surface thereof. The iron powder coated with a metal halide can be prepared by mixing an iron powder with an aqueous solution of the metal halide, and thereafter drying the resultant to remove moisture.

The average particle diameter of the iron powder is, from the viewpoint of making good the contact with oxygen, preferably 1 mm or less, more preferably 500 $\mu$m or less, and still more preferably 200 $\mu$m or less, and is, from the viewpoint of suppressing the generation of dusts, preferably 1 $\mu$m or more, more preferably 10 $\mu$m or more, and still more preferably 20 $\mu$m or more. Specifically, the average particle diameter is preferably 1 $\mu$m or more and 1 mm or less, more preferably 10 $\mu$m or more and 500 $\mu$m or less and still more preferably 20 $\mu$m or more and 200 $\mu$m or less.

Here, the particle diameter mentioned herein indicates a particle diameter measured from weight fractions by sizes of sieve openings after vibration for 5 min by using standard sieves according to ISO 3310-1:2000 (corresponding to JIS Z8801-1:2006).

The average particle diameter of the iron powder can be measured by a method described in Examples.

The specific surface area of the iron powder is, from the viewpoint of the oxygen absorption performance, preferably 0.05 m$^2$/g or more and more preferably 0.1 m$^2$/g or more, and from the viewpoint of suppressing generation of dusts, preferably 0.5 m$^2$/g or less and more preferably 0.2 m$^2$/g or less. Specifically, the specific surface area of the iron powder is preferably 0.05 m$^2$/g or more and 0.5 m$^2$/g or less and more preferably 0.1 m$^2$/g or more and 0.2 m$^2$/g or less.

The specific surface area of the iron powder can be measured by the BET multipoint method. Specifically, the specific surface area can be measured by a method described in Examples.

The oxygen scavenger composition of the present invention contains the iron as a main agent. The content of the iron is not especially limited, but is, in the oxygen scavenger composition, preferably 40% by mass or more and 90% by mass or less, more preferably 45% by mass or more and 80% by mass or less, still more preferably 50% by mass or more and 70% by mass or less and further still more preferably 50% by mass or more and 60% by mass or less.

Here, in the present invention, "granulation" refers to an operation in which a starting material powder composed of a single or multiple components is mixed with a binding agent and the like to reduce the presence ratio of fine powder as compared with the state of the starting material powder, to be thereby processed into larger particles than the starting material powder. A "granule" refers to a powdery/granular material obtained by the granulation operation wherein the presence ratio of fine powder is reduced as compared with the state of the starting material powder and the starting material powder is processed into larger particles than the starting material powder. The granule of the present invention is not a pressure-moldedproduct. That is, the granule contained in the oxygen scavenger composition of the present invention can be produced simply in a low cost without carrying out pressure-molding.

The structure of the granule is not especially limited, and for example, may be one in which part of the above components are localized as layers to form layer structures (for example, an ($\alpha$ layer/$\beta$ layer) granule of PTL2), or may be one in which the granule is formed in a state of a composition that the above components are mixed (hereinafter, referred to as "mixed granule").

In particular, the granule to be used in the oxygen scavenger composition of the present invention is, from the viewpoint of the production efficiency and the oxygen absorption performance, preferably the mixed granule of a composition containing the water retention agent, the swelling agent, the metal salt, water and the iron, and it is preferable that the mixed granule contains the iron dispersed throughout the entire mixed granule.

The content of the granule in the oxygen scavenger composition of the present invention is preferably 90% by mass or more, more preferably 95% by mass or more, still more preferably 98% by mass or more and further still more preferably 99.5% by mass or more. The upper limit is 99.85% by mass.

<Hydrophobic silica>

The hydrophobic silica to be used in the present invention plays a role as a fluidity modifier, and it is preferable that the hydrophobic silica is present as a layer containing the hydrophobic silica on the outside of the granule.

Here, the hydrophobic silica is a silica treated with a hydrophobizing agent.

The hydrophobizing agent includes silane coupling agents such as hexamethyldisilazane (HMDS) and dimethyldichlorosilane (DMDS), and silicone oil treatment agents such as dimethylsilicone oil and amino-modified silicone oil; and among these, from the viewpoint of improving the fluidity, silane coupling agents are preferable. The treating amount of the hydrophobizing agent is preferably 1 to 7 mg/m$^2$ per surface area of the silica particle. A method of the hydrophobization is not especially limited.

In the present invention, in particular, by using the hydrophobic silica having an M value of 55 or more and an average particle diameter of 0.1 $\mu$m or more and 5.0 $\mu$m or less, even when the content is relatively low, the fluidity of the oxygen scavenger composition can be improved; and in particular, by making the content of the hydrophobic silica to be in the range of 0.15 parts by mass or more and 0.5 parts by mass or less with respect to 100 parts by mass of the granule, the effect of improving the fluidity and the effect of preventing the flying-up can both be attained and the handleability during production of the oxygen scavenger package is improved.

The M value of the hydrophobic silica is, from the viewpoint of improving the fluidity, 55 or more, preferably 60 or more and more preferably 65 or more. Here, the upper limit is not especially limited, but is, from the viewpoint of availability, for example, 70 or less.

Here, the M value (methanol wettability) is a characteristic value indicating the degree of hydrophobization of a powder surface (degree of hydrophobization); and a higher M value indicates a lower hydrophilicity and a higher proportion of hydrophobization (higher hydrophobicity). With regard to the M value, in the case where a silica powder is put in a mixed solution of water and methanol, the M value is represented by a volume proportion (% by volume) of methanol to the entire mixed solution when the silica powder starts settling down, and can be measured by a method described in Examples. Here, it is usual that the unit (% by volume) of the M value is not described.

The average particle diameter of the hydrophobic silica is 0.1 $\mu$m or more and 5.0 $\mu$m or less, preferably 0.1 $\mu$m or more and 3.0 $\mu$m or less, more preferably 0.5 $\mu$m or more and 2.0 $\mu$m or less, still more preferably 1 $\mu$m or more and 2.0 $\mu$m or less and further still more preferably 1.5 $\mu$m or more and 2 $\mu$m or less. It is conceivable that due to that the average particle diameter is in the above range, the adsorption to the granule becomes good. Consequently, sufficient fluidity can be developed and flying-up when the oxygen scavenger composition is filled in a packaging material can effectively be suppressed.

Here, the average particle diameter of the hydrophobic silica can be measured by a method described in Examples.

The apparent specific gravity (apparent density) of the hydrophobic silica is preferably 0.26 g/ml or less and more preferably 0.24 g/ml or less, and preferably 0.10 g/ml or more, more preferably 0.13 g/ml or more and still more preferably 0.16 g/ml or more. Specifically, the apparent specific gravity is preferably 0.10 g/ml or more and 0.26 g/ml or less, more preferably 0.13 g/ml or more and 0.26 g/ml or less and still more preferably 0.16 g/ml or more and 0.24 g/ml or less. It is conceivable that due to that the apparent specific gravity is in the above range, the adsorption to the granule becomes good. Consequently, sufficient fluidity can be developed and flying-up when the oxygen scavenger composition is filled in a packaging material can effectively be suppressed.

Here, the apparent specific gravity of the hydrophobic silica can be measured, for example, by the following method.

(Apparent specific gravity (apparent density) of the hydrophobic silica)

A piston is correctly put in a clear cylinder and is made to spontaneously drop; and the dimension of the upper protruding part thereof is read to 0.01 cm. Then, the piston is pulled out; about 1 to 5 g of a sample (the hydrophobic silica) is weighed with an accuracy of 0.1 g and gently poured in the cylinder, and the cylinder is lightly shaken or given a slight shock to cause the sample deposited on the side surface to drop and cause the upper surface of the content to become smooth. Then, the piston is correctly and gently dropped in through the upper part of the cylinder with fingers applied to the piston. The time until the piston reaches the sample surface is made to be 5 seconds as a rule. At this time, it has to be sensed by finger feeling that the piston has reached the sample surface. When the piston has reached the sample surface, the piston is softly rotated by one rotation with fingers or the cylinder is lightly tapped on the side wall by a wood chip, to cause the piston to fit well, and this operation is finished. The height of the piston protruding above the cylinder upper part is read, and the apparent specific gravity (g/ml) is calculated by the following expression (1).

$$G = S/\{(H_2 - H_1) \times 0.7854D^2\} \dots (1)$$

wherein G denotes an apparent specific gravity (g/ml); S, a mass (g) of the sample; Hi, a difference (cm) in height between the piston and the cylinder when the sample is not present; Hz, a difference (cm) in height between the piston and the cylinder when the sample is present; and D, an inner diameter (cm) of the cylinder.

The hydrophobic silica is not especially limited as long as having the above properties, and may be a commercially available product, and is preferably a precipitated silica particularly surface-treated with a hydrophobizing agent, and more preferably a precipitated silica surface-treated with a silicone oil.

The content of the hydrophobic silica is, with respect to 100 parts by mass of the granule, 0.15 parts by mass or more and 0.5 parts by mass or less and preferably 0.15 parts by mass or more and 0.4 parts by mass or less. Due to that the content of the hydrophobic silica is in such a range, the bulk density of the oxygen scavenger composition is likely to increase and the amount of oxygen absorption is likely to become large; and since the fluidity of the oxygen scavenger composition is improved and flying-up when the oxygen scavenger composition is filled in a packaging material can effectively be suppressed, the handleability during production of the oxygen scavenger package can be improved.

(Other components)

The oxygen scavenger composition of the present invention may contain, in addition to the above components, as required, other components. The other components include alkaline substances, catalysts other than the above, odor absorbents and thermal dispersants.

<Shape of the oxygen scavenger composition>

The shape of the oxygen scavenger composition of the present invention is not especially limited, but examples thereof include a spherical shape, a nearly spherical shape, an ellipsoidal shape and a columnar shape; and a spherical shape and a nearly spherical shape are preferable and a spherical shape is more preferable, because it is likely that these shapes are better in the filling property and are higher in the bulk density.

The average particle diameter of the oxygen scavenger composition of the present invention is preferably 0.3 mm or more and 5.0 mm or less, more preferably 0.5 mm or more and 2.0 mm or less and still more preferably 0.5 mm or more and 1.0 mm or less. Due to that the above average particle diameter is 0.3 mm or more, it is likely that there is suppressed the oxygen scavenger composition depositing electrostatically or otherwise on a powdery/granular material-contact portion of a packaging machine during filling and packaging; and due to that the above average particle diameter is 5.0 mm or less, it is likely that there are suppressed gaps among the powdery/granular materials becoming too large and the amount of oxygen absorption per unit volume decreasing.

In order to obtain the oxygen scavenger composition having an average particle diameter in the above range, the case may be attained, for example, by carrying out sieving by using sieves of 0.3 mm and 5.0 mm in opening.

The average particle diameter of the oxygen scavenger composition can be measured, for example, by a commercially available laser diffraction scattering type particle size distribution analyzer ("LA-960", manufactured by HORIBA Ltd.).

The bulk density of the oxygen scavenger composition of the present invention is not especially limited, but is preferably 1.0 g/ml or more, more preferably 1.3 g/ml or more, still more preferably 1.4 g/ml or more and further still more preferably 1.5 g/ml or more, and practically 2.5 g/ml or less. Specifically, the bulk density is preferably 1.0 g/ml or more and 2.5 g/ml or less, more preferably 1.3 g/ml or more and 2.5 g/ml or less, still more preferably 1.4 g/ml or more and 2.0 g/ml or less and further still more preferably 1.5 g/ml or more and 2.0 g/ml or less. Due to that the bulk density is 1.0 g/ml or more, the amount of oxygen adsorption per unit volume is likely to be more excellent.

In order to obtain the oxygen scavenger composition having a bulk density in the above range, for example, one having a target bulk density may be selected by a specific gravity classifier ("High Speed Aspirator", manufactured by Tokyo Seifunki Mfg., Co., Ltd., or the like).

The bulk density of the oxygen scavenger composition can be measured according to JIS Z8901:2006.

[Method for producing the oxygen scavenger composition]

A method for producing the oxygen scavenger composition of the present invention is not especially limited, but a method for producing the oxygen scavenger composition can suitably be used which includes a step of mixing the granule and the hydrophobic silica.

Specifically, it is preferable that the method for producing the oxygen scavenger composition includes a step (I) of obtaining the granule containing the water retention agent, the swelling agent, the metal salt, water and the iron, and a step (II) of mixing the granule with the hydrophobic silica having an M value of 55 or more and an average particle diameter of 0.1 μm or more and 5.0 μm or less in a blend amount of the hydrophobic silica of 0.15 parts by mass or more and 0.5 parts by mass or less with respect to 100 parts by mass of the granule, to thereby prepare the oxygen scavenger composition.

<Step (I)>

The step (I) of obtaining the granule containing the water retention agent, the swelling agent, the metal salt, water and the iron is not especially limited, and as described in PTL2, may charge an aqueous solution of a metal halide in the water retention agent and the swelling agent under mixing to prepare a powdery/granule material being a starting material of an α layer, and thereafter charging an iron powder to the powdery/granule material to cause the iron powder to deposit on the outside of the α layer, to obtain an (α layer/β layer) powdery/granule material, or may mix the water retention agent, the swelling agent, the metal halide, water and the iron until these are homogenously dispersed, to thereby obtain a mixed granule.

It is preferable from the viewpoint of efficiently obtaining the granule that the step (I) is a step of collectively mixing the water retention agent, the swelling agent, the metal salt, water and the iron for granulation. It is presumed that due to that the water retention agent, the swelling agent, the metal salt, water and the iron are collectively mixed for granulation, since the iron is dispersed in the entire mixed granule and the iron and the water are present adjacently, the reaction amount in the reaction initial stage of the oxidative reaction of the iron is large and consequently, the oxygen absorption rate in the reaction initial stage is fast, whereby oxygen in a sealed container can be absorbed in a short time.

From the viewpoint of obtaining a more homogeneous granule, in the step of collectively mixing the water retention agent, the swelling agent, the metal salt, water and the iron for granulation, the metal salt and the water may be mixed in the state of an aqueous solution of the metal salt.

<Step (II)>

The step (II) is not especially limited in which the granule is mixed with the hydrophobic silica having an M value of 55 or more and an average particle diameter of 0.1 $\mu$m or more and 5.0 $\mu$m or less in a blend amount of the hydrophobic silica of 0.15 parts by mass or more and 0.5 parts by mass or less with respect to 100 parts by mass of the granule, to thereby prepare the oxygen scavenger composition; and a predetermined hydrophobic silica in a predetermined blend amount is charged and mixed in the granule to form a layer containing the hydrophobic silica on the outside of the granule, whereby the oxygen scavenger composition can be prepared.

Since the iron being a main agent of the oxygen scavenger reacts with oxygen, the reaction with oxygen slowly progresses even in the case where water, the metal halide and the like are not present. Hence, it is preferable that the mixing is carried out in an inert atmosphere (in the case of using a substantially closed system, the system interior is usually made to be an inert gas (For example, $N_2$) atmosphere containing no oxygen), and a heat removal means is suitably adopted.

A mixing apparatus is not especially limited, but as specific examples thereof, there can be used a Nauta mixer (manufactured by Hosokawa Micron Corp.), a conical mixer (manufactured by Ohno Chemical Machinery Co., Ltd.), a vertical granlulator (manufactured by Powrex Corp.), an SP granulator (manufactured by Dalton Corp.), a high-speed mixer (manufactured by Earthtechnica Co. Ltd.) and a granulator (manufactured by Akirakiko Co. Ltd.).

[Oxygen scavenger package]

The oxygen scavenger package of the present invention contains the above-mentioned oxygen scavenger composition and an air-permeable packaging material accommodating the oxygen scavenger composition.

<Packaging material>

The packaging material includes one in which two sheets of air-permeable packaging material are laminated to make a bag form, one in which one sheet of air-permeable packaging material and one sheet of non-air-permeable packaging material are laminated to make a bag form, and one in which one sheet of air-permeable packaging material is folded and edges except the folded portion are sealed to make a bag form.

Here, in the case where the air-permeable packaging material and the non-air-permeable packaging material are of a quadrilateral shape, examples of the packaging material include one in which two sheets of air-permeable packaging material are superposed and four sides are heat sealed to make a bag form, one in which one sheet of air-permeable packaging material and one sheet of non-air-permeable packaging material are superposed and four sides are heat sealed to make a bag form, and one in which one sheet of air-permeable packaging material is folded and three sides except the folded portion are heat sealed to make a bag form. Further, the packaging material may also be one in which the air-permeable packaging material is made into a cylindrical shape and both ends and the trunk of the cylindrical body are heat sealed to make a bag form.

(Air-permeable packaging material)

As the air-permeable packaging material, there are selected packaging materials which oxygen and carbon dioxide can permeate. Among these, there is suitably used one which has an air resistance by a Gurley tester method of 600 seconds or less, more preferably 90 seconds or less, or one which has an air resistance by an Oken tester method of preferably 40,000 seconds or less, more preferably 30,000 seconds or less, still more preferably 20,000 seconds or less and further still more preferably 10,000 seconds or less, and preferably 500 seconds or more and more preferably 1,000 seconds or more. Here, the air resistance refers to a value measured by the method of JIS P8117(1998). More specifically, the air resistance can be measured by a method described in Examples.

As the air-permeable packaging material, there are used ones in which the air permeability is imparted to paper, nonwoven fabric and besides, a plastic film. As the plastic film, there can be used, for example, a laminated film and the like in which a film of polyethylene terephthalate, polyamide, polypropylene, polycarbonate or the like and a film, as a seal layer, of polyethylene, an ionomer, polybutadiene, an ethylene-acrylic acid copolymer, an ethylene-methacrylic acid copolymer, an ethylene-vinyl acetate copolymer or the like, are laminated and adhered. Further, laminated products of these can also be used as the air-permeable packaging material.

A method of imparting the air permeability can adopt, in addition to piercing machining using cold needles or hot needles, various types of methods. In the case where the air permeability is provided by piercing machining, the air permeability can optionally be regulated by the diameter and the number of perforations to be pierced, the material and the like.

It is preferable that the thickness of the laminated film is 50 to 300 μm; being 60 to 250 μm is more preferable. In this case, as compared with the case where the thickness is out of the above range, the packaging material can be made one which holds the strength and is excellent in the heat sealability and the packaging suitability.

[Method for producing the oxygen scavenger package]

A method for producing the oxygen scavenger package of the present invention includes a step of accommodating the above-mentioned oxygen scavenger composition in the above-mentioned air-permeable packaging material.

The oxygen scavenger composition of the present invention, since being good in the fluidity and little in the flying-up, is excellent in the handleability during production of the oxygen scavenger package. Hence, the production process can be made efficient, and contamination of an apparatus due to the flying-up of the oxygen scavenger composition can also be prevented, and the number of times of cleaning and the like can be reduced. Consequently, the productivity of the oxygen scavenger package can be improved.

Here, the oxygen scavenger composition and the packaging material are as described above.

Hitherto, embodiments of the present invention have been interpreted, but the present invention is not limited to the above embodiments, and includes every aspect included in the concept and claims of the present invention, and various changes and modifications can be made within the scope of the present invention.

Examples

Hereinafter, the present embodiment will be described in detail by way of Examples and Comparative Examples, but the present embodiment may suitably be changed as long as the operation and effect of the present invention are attained. Here, "parts" in Examples and Comparative Examples, unless otherwise specified, means parts by mass. Various measurements and evaluations in each Production Example, Example and Comparative Example were carried out as follows.

(Average particle diameter of starting materials, mixed granules and oxygen scavenger compositions)

The average particle diameter of starting materials (excluding an iron powder and silicas), a mixed granule and oxygen scavenger compositions was measured as an average particle diameter (D50) of a cumulative frequency of 50% in a volume-based particle size distribution by a laser diffraction scattering type particle size distribution analyzer ("LA-960", manufactured by HORIBA Ltd.).

(Average particle diameter of the iron powder)

The average particle diameter of the iron powder was measured as an average particle diameter (D50) of a cumulative frequency of 50% from weight fractions by sizes of sieve openings after vibration for 5 min by using standard sieves according to ISO 3310-1:2000 (equivalent to JIS Z8801-1:2006).

(Specific surface area of the iron powder)

The specific surface area (unit: $m^2/g$) of the iron powder was measured based on a BET multipoint method according to JIS Z8830:2013.

(Average particle diameter of the silica)

The average particle diameter of the silica was measured as an average particle diameter (D50) of a cumulative frequency of 50% in a volume-based particle size distribution by a particle size distribution analyzer ("Microtrac MT3300EX2", manufactured by MictrotracBell Corp.).

The measurement was carried out twice under the following condition, and the average value thereof was taken as an average particle diameter of the silica.

Refractive index: 1.45
Solvent: methyl ethyl ketone
Shape: non-spherical

(M value of the silica)

The M value of the silica was measured by the following method.

First, there were prepared water/methanol mixed solutions varied in methanol concentration at intervals of 5% by volume.

Then, about 5 ml of one of the above mixed solutions was taken in a 10-ml test tube; and 0.2 g of a measuring sample was put therein, and shaken twice; and the presence/absence of settling of the measuring sample was checked.

The above operation was carried out for the mixed solution of each concentration, and the concentration (% by volume) of methanol in the mixed solution when the measuring sample started settling down in the mixed solution was taken as the M value.

(Bulk density of oxygen scavenger compositions)

The bulk density (unit: g/ml) of oxygen scavenger compositions was measured by a powder characteristics evaluation tester ("Powder Tester PT-X", manufactured by Hosokawa Micron Corp.). The measurement was carried out three times, and the average value was calculated as a bulk density of the oxygen scavenger compositions.

(Angle of repose of oxygen scavenger compositions)

The angle of repose of oxygen scavenger compositions was measured by a powder characteristics evaluation tester ("Powder Tester PT-X", manufactured by Hosokawa Micron Corp.). The measurement was carried out three times, and the average value was calculated as an angle of repose of the oxygen scavenger compositions.

A lower value of the angle of repose means better fluidity; and in the present Examples, an oxygen scavenger composition of 35° or less in angle of repose was evaluated as "good" in fluidity; and an oxygen scavenger composition of more than 35°, as "poor" in fluidity. When the angle of repose of an oxygen scavenger composition was 35° or less, since the fluidity was good, the handleability during production of an oxygen scavenger package was improved.

(Amount of dust emission from oxygen scavenger compositions)

The amount of dust emission from oxygen scavenger compositions was measured by the following method.

200 g of an oxygen scavenger composition was put in an openable/closable funnel of 8 mm in the opening inner diameter, and the funnel was installed in a windless room, and the content was dropped from a height of 30 cm over about 10 seconds. By using a digital dust meter ("LD-5R", manufactured by Sibata Scientific Technology Ltd.) installed at a place 15 cm away in the horizontal direction from the dropping place, the amount of dusts measured for 2 min was defined as the amount of dust emission (COUNT). The measurement was carried out three times, and the average value was calculated as an amount of dust emission from the oxygen scavenger composition.

A lower value of dust emission means being less in flying-up; and in the present Example, the case of 1,000 COUNT or less was evaluated as being little in flying-up and "good", and the case of more than 1,000 COUNT, as being much in flying-up and "poor". When the amount of dust emission from the oxygen scavenger composition is 1,000 COUNT or less, the flying-up was little and contamination of the apparatus due to the flying-up of the oxygen scavenger composition could be suppressed.

(Production Example 1: Preparation of a granule)

1,240 parts of a diatomaceous earth ("CG-2U", manufactured by Isolite Insulating Products Co. Ltd., average particle diameter: 0.44 mm), 1,120 parts of an activated carbon ("S-W50", manufactured by Futamura Chemical Co. Ltd., average particle diameter: 10 $\mu$m), 225 parts of a calcium bentonite ("Neokunibond", manufactured by Kunimine Industries Co. Ltd.), 20 parts of a carboxylmethylcellulose sodium ("F350HC-4", manufactured by Nippon Paper Chemical Co. Ltd.), a sodium chloride aqueous solution in which 407 parts of sodium chloride was dissolved in 2,008 parts of water, and 6,000 parts of an iron powder (average particle diameter: 100 $\mu$m, specific surface area: 0.104 m$^2$/g) were charged in an SP Granulator ("SPG-25T", manufactured by Dalton Corp.), and mixed at 240 rpm for 3 min to thereby obtain a mixed granule 1 (average particle diameter: 0.78 mm).

(Example 1)

200 g of the mixed granule 1 obtained in Production Example 1 and 0.3 g of a hydrophobic silica 1 ("SS-50F", manufactured by Tosoh Silica Corp., M value: 65, average particle diameter: 1.95 $\mu$m, apparent density: 0.16 to 0.24 g/ml (catalog value)) were sealed in a gas barrier bag (manufactured by Fukusuke Kogyo Co. Ltd., a laminate of a barrier nylon and a straight-chain low-density polyethylene (LLDPE), 220 mm × 300 mm), and homogeneously stirred to thereby obtain an oxygen scavenger composition (average particle diameter: 0.87 mm, bulk density: 1.48 g/ml) having a layer containing the hydrophobic silica formed on the outside of the mixed granule.

(Examples 2 to 4)

In Examples 2 to 4, oxygen scavenger compositions of Examples 2 to 4 were obtained by the same method as in Example 1, except for altering the content of the hydrophobic silica 1 to that indicated in Table 1.

(Comparative Examples 1 and 2)

In Comparative Examples 1 and 2, oxygen scavenger compositions of Comparative Examples 1 and 2 were obtained by the same method as in Example 1, except for altering the content of the hydrophobic silica 1 to that indicated in Table 1.

(Comparative Examples 3 to 6)

In Comparative Examples 3 to 6, oxygen scavenger compositions of Comparative Examples 3 to 6 were obtained by the same method as in Example 1, except for blending, in place of the hydrophobic silica 1, a hydrophobic silica 2 ("SS-30P", manufactured by Tosoh Silica Corp., M value: 65, average particle diameter: 18.9 $\mu$m, apparent density: 0.27 to 0.35 g/ml (catalog value)) so the content as to become a content indicated in Table 1.

(Comparative Example 7)

In Comparative Example 7, an oxygen scavenger composition of Comparative Example 7 was obtained by the same method as in Example 1, except for blending, in place of the hydrophobic silica 1, a hydrophobic silica 3 ("SS-80K", manufactured by Tosoh Silica Corp., M value: 50, average particle diameter: 56.0 $\mu$m, apparent density: 0.25 to 0.45 g/ml (catalog value)) so the content as to become a content indicated in Table 1.

(Comparative Example 8)

In Comparative Example 8, an oxygen scavenger composition of Comparative Example 8 was obtained by the same method as in Example 1, except for blending, in place of the hydrophobic silica 1, a fluid silica 4 ("SS-72F", manufactured by Tosoh Silica Corp., M value: 0, average particle diameter: 5.45 $\mu$m, apparent density: 0.23 to 0.31 g/ml (catalog value)) so the content as to become a content indicated in Table 1.

(Comparative Example 9)

In Comparative Example 9, an oxygen scavenger composition of Comparative Example 9 was obtained by the same method as in Example 1, except for blending, in place of the hydrophobic silica 1, a talc (manufactured by Fujifilm Wako Pure Chemical Corp., average particle diameter: 6 to 10 $\mu$m (catalog value)) so the content as to become a content indicated in Table 1.

Table 1

| | Fluidity Modifier | | | | Fluidity | | Flying-up | |
|---|---|---|---|---|---|---|---|---|
| | Kind | M value | Average particle diameter | Content | Angle of repose | Evaluation | Amount of dust emission | Evaluation |
| | | (% by volume) | μm | parts by mass (with respect to 100 parts by mass of granule) | ° (degrees) | | COUNT | |
| Comparative Example 1 | Hydrophobic silica 1 | 65 | 1.95 | 0.1 | 39.8 | poor | - | - |
| Example 1 | | | | 0.15 | 32.6 | good | - | - |
| Example 2 | | | | 0.2 | 33.5 | good | 543 | good |
| Example 3 | | | | 0.3 | 32.5 | good | 648 | good |
| Example 4 | | | | 0.4 | 32.9 | good | 640 | good |
| Comparative Example 2 | | | | 0.6 | 33.7 | good | 1703 | poor |
| Comparative Example 3 | Hydrophobic silica 2 | 65 | 18.9 | 0.2 | 38.3 | poor | - | - |
| Comparative Example 4 | | | | 0.3 | 36.2 | poor | 2145 | poor |
| Comparative Example 5 | | | | 0.4 | 32.5 | good | 2426 | poor |
| Comparative Example 6 | | | | 0.6 | 32.2 | good | 3531 | poor |
| Comparative Example 7 | Hydrophobic silica 3 | 50 | 56.0 | 0.5 | 41.4 | poor | - | - |
| Comparative Example 8 | Fluid silica 4 | 0 | 5.45 | 0.5 | 39.3 | poor | - | - |
| Comparative Example 9 | Talc | - | (6 to 10) | 0.5 | 41.4 | poor | - | - |

As shown in Table 1, in the case where the hydrophobic silica 1, which had an M value of 55 or more and an average particle diameter of 0.1 μm or more and 5.0 μm or less, was used in a predetermined content, it was confirmed that the effect of improving the fluidity and the effect of preventing the flying-up could be both simultaneously satisfied (Examples 1 to 4). In particular, by using the above predetermined hydrophobic silica 1, it was confirmed that even in a relatively low content thereof, the fluidity of the oxygen scavenger composition could be improved (Example 1). As the content of silica is increased, the flying-up of an oxygen scavenger composition is usually likely to increase, but it was confirmed that by using the above predetermined hydrophobic silica 1, even when the content was increased to a certain amount, the flying-up of particles could be prevented (Example 4).

By contrast, it was confirmed that even in the case of using the above predetermined hydrophobic silica 1, in the case where the content of the silica was less than 0.15% by mass, the fluidity was insufficient (Comparative Example 1); and in the case where the content of the silica was more than 0.5% by mass, though the fluidity was sufficient, the flying-up of the oxygen scavenger composition became much (Comparative Example 2).

It was confirmed that, in the case of using the hydrophobic silica 2, in which though the M value was 55 or more, the average particle diameter was more than 5.0 μm, in a relatively low content, the fluidity was insufficient (Comparative Examples 3 and 4), and as the content was increased, the flying-up of the oxygen scavenger composition became much (Comparative Examples 4 to 6). That is, in the case of using the hydrophobic silica 2, in which even though the M value was 55 or more, the average particle diameter was more than 5.0 μm, the effect of improving the fluidity and the effect of preventing the flying-up could not be both simultaneously satisfied (Comparative Examples 3 to 6).

Further, in the case of using the hydrophobic silica 3 or the fluid silica 4, having an M value of less than 55, or using the talc, it was confirmed that the effect of improving the fluidity could not be attained (Comparative Examples 7 to 9).

Further, an evaluation of the oxygen absorption performance was carried out on the oxygen scavenger composition of Example 1, by the following method.

[1] Fabrication of an oxygen scavenger package (sample for measuring the amount of oxygen absorption)

0.8 g of the oxygen scavenger composition fabricated in Example 1 was filled in an air-permeable packaging material A, and the opening was heat sealed in a sealing width of 5 mm to thereby fabricate a small bag-shaped oxygen scavenger package.

<Air-permeable packaging material A>

The air-permeable packaging material A was fabricated as a bag-shaped air permeable packaging material of 40 mm × 30 mm in outer dimensions, by using a multilayer sheet (thickness: 52 μm, air resistance: 5,300 seconds) having a constitution of straight-chain low-density polyethylene (perforated film, thickness: 30 μm, hereinafter, described simply as "LLDPE")/machine made paper (weight basis: 50 g/m$^2$)/polyethylene terephthalate (perforated film, thickness- μm 12 μm, hereinafter, described as "PET"), folding the multilayer sheet so that LLDPE became the inside, and heat sealing three sides in a sealing width of 5 mm so that one side became an opening.

(Air resistance of the multilayer sheet)

The air resistance of the multilayer sheet was measured three times by using a digital Oken type air permeability tester ("EG02", manufactured by Asahi Seiko Co. Ltd.). The arithmetic average value of the obtained results was taken as a measurement result.

[2] Measurement of the amount of oxygen absorption

The measurement of the amount of oxygen absorption was carried out by using the oxygen scavenger package fabricated in the above [1], by the following method.

First, one oxygen scavenger package was accommodated, together with 1,500 ml of air at 25°C, in a nylon/polyethylene laminate film-made gas barrier bag (manufactured by Fukusuke Kogyo Co. Ltd., dimensions: 250 mm × 400 mm, oxygen permeability: 7.3 ml/m$^2$·day·atm); and the opening was heat sealed. Further, the oxygen concentration (initial oxygen concentration) in the gas barrier bag at this time was measured.

Then, the gas barrier bag was promptly put in a thermostatic chamber at 25°C, and held for 7 days; thereafter, the oxygen concentration (oxygen concentration after the storage) in the gas barrier bag was measured and the amount of oxygen absorption (the initial oxygen concentration - the oxygen concentration after the storage) was calculated. Further, by dividing the calculated amount of oxygen absorption by a mass (unit: g) of the oxygen scavenger composition, the amount of oxygen absorption (unit: ml/1 g of bulk powder) per unit mass of the oxygen scavenger composition (bulk powder) was calculated.

Here, the oxygen concentration was measured by using a gas analyzer ("Check Mate 3", manufactured by Mocon Co. Ltd.). The measurement was carried out by inserting a hollow needle present at the tip of a sampling silicone tube being an attachment of the gas analyzer into the gas barrier bag inside from a sampling rubber sheet (25 mm × 25 mm, thickness: 2 mm) previously pasted to the gas barrier bag, and measuring the oxygen concentration in the gas barrier bag.

The measurement was carried out three times and the arithmetic average value of the obtained results was evaluated as the amount of oxygen absorption of the oxygen scavenger composition of Example 1. A larger amount of oxygen absorption means a better oxygen absorption performance.

[3] Evaluation results

As a result of the above measurement, with regard to the oxygen scavenger composition of Example 1, the amount of oxygen absorption per unit mass of the oxygen scavenger composition (bulk powder) was 172.2 [ml/1 g of bulk powder] or more.

From the above result, it was confirmed the oxygen scavenger composition of the present invention exhibited an excellent effect also in the aspect of the oxygen absorption performance.

Industrial Applicability

The oxygen scavenger composition of the present invention, since being good in the fluidity and little in the flying-up, is excellent on the handleability during production of an oxygen scavenger package. Hence, the production process can be made efficient; contamination of an apparatus due to the flying-up of the oxygen scavenger composition can also be prevented and the number of times of cleaning and the like can be reduced. Consequently, the productivity of the oxygen scavenger package can be improved.

**Claims**

1. An oxygen scavenger composition, comprising: a granule comprising a water retention agent, a swelling agent, a metal salt, water and an iron; and a hydrophobic silica having an M value of 55 or more and an average particle diameter of 0.1 $\mu$m or more and 5.0 $\mu$m or less,
   wherein a content of the hydrophobic silica is 0.15 parts by mass or more and 0.5 parts by mass or less with respect to 100 parts by mass of the granule.

2. The oxygen scavenger composition according to claim 1, wherein the water retention agent comprises one or more selected from the group consisting of diatomaceous earth, silica and activated carbon.

3. The oxygen scavenger composition according to claim 1 or 2, wherein the swelling agent comprises one or more selected from the group consisting of carboxymethylcellulose calcium, carboxymethylcellulose sodium, calcium bentonite and sodium bentonite.

4. The oxygen scavenger composition according to any one of claims 1 to 3, wherein the hydrophobic silica is a surface-treated precipitated silica.

5. The oxygen scavenger composition according to any one of claims 1 to 4, wherein the hydrophobic silica is a precipitated silica surface-treated with a silicone oil.

6. A method for producing an oxygen scavenger composition according to any one of claims 1 to 5, the method comprising a step of mixing the granules and the hydrophobic silica.

7. An oxygen scavenger package, comprising: an oxygen scavenger composition according to any one of claims 1 to 5; and an air-permeable packaging material accommodating the oxygen scavenger composition.

8. A method for producing an oxygen scavenger package, comprising a step of accommodating an oxygen scavenger composition according to any one of claims 1 to 5 in an air-permeable packaging material.

## INTERNATIONAL SEARCH REPORT

| | International application No. |
|---|---|
| | **PCT/JP2022/040348** |

### A. CLASSIFICATION OF SUBJECT MATTER

***B01D 53/14***(2006.01)i; ***B01J 20/02***(2006.01)i; ***B01J 20/10***(2006.01)i; ***B01J 20/28***(2006.01)i; ***B01J 20/30***(2006.01)i
FI:    B01D53/14 311; B01J20/10 C; B01J20/28 Z; B01J20/30; B01J20/02 A

According to International Patent Classification (IPC) or to both national classification and IPC

### B. FIELDS SEARCHED

Minimum documentation searched (classification system followed by classification symbols)

B01D53/14; B01J20/02; B01J20/10; B01J20/28; B01J20/30; A23L3/3436; C01B33/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2020-192485 A (MITSUBISHI GAS CHEMICAL COMPANY, INC.) 03 December 2020 (2020-12-03)<br>claims 1-4, paragraphs [0036]-[0037], [0039], [0046], [0057]-[0058] | 1-8 |
| Y | WO 2015/115184 A1 (SAN NOPCO LTD.) 06 August 2015 (2015-08-06)<br>paragraphs [0002], [0115]-[0116], [0118], [0125]-[0126] | 1-8 |
| A | JP 2008-264665 A (MITSUBISHI GAS CHEMICAL COMPANY, INC.) 06 November 2008 (2008-11-06)<br>entire text | 1-8 |
| A | JP 2021-146292 A (MITSUBISHI GAS CHEMICAL COMPANY, INC.) 27 September 2021 (2021-09-27)<br>entire text | 1-8 |
| A | WO 2017/169015 A1 (MITSUBISHI GAS CHEMICAL COMPANY, INC.) 05 October 2017 (2017-10-05)<br>entire text, all drawings | 1-8 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 November 2022** | **13 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| | International application No. |
|---|---|
| | **PCT/JP2022/040348** |

**C.     DOCUMENTS CONSIDERED TO BE RELEVANT**

| Category* | Citation of document, with indication, where appropriate, of the relevant passages | Relevant to claim No. |
|---|---|---|
| A | JP 2003-137532 A (DEGUSSA AG) 14 May 2003 (2003-05-14)<br>entire text, all drawings | 1-8 |
| A | JP 2003-171117 A (SHIN ETSU CHEM CO LTD) 17 June 2003 (2003-06-17)<br>entire text | 1-8 |
| A | JP 2001-265063 A (DAINIPPON INK & CHEM INC) 28 September 2001 (2001-09-28)<br>entire text | 1-8 |
| A | WO 2020/129547 A1 (MITSUBISHI GAS CHEMICAL COMPANY, INC.) 25 June 2020<br>(2020-06-25)<br>entire text | 1-8 |
| A | JP 2021-90964 A (POWDERTECH CO LTD) 17 June 2021 (2021-06-17)<br>entire text | 1-8 |

Form PCT/ISA/210 (second sheet) (January 2015)

**INTERNATIONAL SEARCH REPORT**
Information on patent family members

International application No.

**PCT/JP2022/040348**

| Patent document cited in search report | | | Publication date (day/month/year) | Patent family member(s) | | | Publication date (day/month/year) |
|---|---|---|---|---|---|---|---|
| JP | 2020-192485 | A | 03 December 2020 | US 2022/0226799 A1 claims 1, 3-5, paragraphs [0056]-[0057], [0059], [0068], [0079]-[0080] WO 2020/241378 A1 EP 3977864 A1 CN 113811195 A KR 10-2022-0012235 A | | | |
| WO | 2015/115184 | A1 | 06 August 2015 | US 2016/0326003 A1 paragraphs [0002], [0119]-[0120], [0122], [0130]-[0131] CN 105793195 A | | | |
| JP | 2008-264665 | A | 06 November 2008 | (Family: none) | | | |
| JP | 2021-146292 | A | 27 September 2021 | WO 2021/187130 A1 | | | |
| WO | 2017/169015 | A1 | 05 October 2017 | US 2019/0083955 A1 entire text, all drawings EP 3437715 A1 CN 108472577 A KR 10-2018-0123711 A JP 6195042 B1 | | | |
| JP | 2003-137532 | A | 14 May 2003 | US 2003/0130379 A1 entire text, all drawings EP 1281734 A1 KR 10-2003-0022685 A CN 1405239 A | | | |
| JP | 2003-171117 | A | 17 June 2003 | (Family: none) | | | |
| JP | 2001-265063 | A | 28 September 2001 | (Family: none) | | | |
| WO | 2020/129547 | A1 | 25 June 2020 | US 2022/0072503 A1 entire text EP 3900811 A1 CN 113242757 A KR 10-2021-0102224 A | | | |
| JP | 2021-90964 | A | 17 June 2021 | (Family: none) | | | |

Form PCT/ISA/210 (patent family annex) (January 2015)

**EP 4 427 834 A1**

**Patent documents cited in the description**

- JP 54035883 A

- WO 2017169015 A